# EUROPEAN PATENT APPLICATION

(11) **EP 4 386 219 A1**
(43) Date of publication of application: **19.06.2024**
(21) Application number: 23217175.1
(22) Date of filing: 15.12.2023
(51) Int. Cl.: F16B 7/06, A01B 59/00, A01B 61/02, F16F 1/00

(54) **CONNECTOR LINK OF THREE-POINT LINKAGE**

(30) Priority: 15.12.2022 IN 202211072672
(71) Applicant: Uniparts India Ltd., New Delhi 110070 (IN)
(72) Inventor: COENEN, Herbert, 53639 Koenigswinter (DE); MANIBASKAR, L., 605013 Pondicherry (IN)
(74) Representative: Ström & Gulliksson AB

(57) **Abstract**

A connector link (1) disclosed here comprises a tubular body (13), a threaded bolt (8), and an unthreaded bolt (9). The threaded bolt (8) is insertable within one end of the tubular body (13), where the threaded bolt (8) is configured to be threaded inside the tubular body (13) for adjustment of length of the connector link (1). The unthreaded bolt (9) is insertable within other end of the tubular body (13), where the unthreaded bolt (9) is connected to a suspension member (14, 10) to counter compressive and expansive forces caused due to movement of an implement that is connected to the unthreaded bolt (9).

## Description

### FIELD OF INVENTION

The present invention relates to a vehicle with system to attach implements, such as three-point linkage system for vehicles. Specifically, the invention relates to a connector link for safer three-point link system.

### BACKGROUND OF INVENTION

Background description includes information that may be useful in understanding the present invention. It is not an admission that any of the information provided herein is prior art or relevant to the presently disclosed invention, or that any publication specifically or implicitly referenced is prior art. Agricultural vehicles, such as tractors typically include a hitch or linkage assembly, such as a 3-point linkage, for coupling an implement to the tractor. Presently 3-point hitch systems are rigid mechanical parts including two lower draft links and an adjustable connector link or centre link.

A shock absorber assembly designed to absorb shocks transmitted between a vehicle (such as a tractor) and an article (such as an agricultural equipment) that the vehicle is connected to is envisaged for large agricultural vehicles but even such system is not available for an all-terrain vehicle (ATV) which is usually made for one rider to go off-roading of a utility task vehicle (UTV) which is a larger type of ATV designed to haul heavier loads. In particular, but not exclusively, the shock absorber assembly is used to absorb shocks transmitted from equipment to a three-point hitch of a vehicle which supports the agricultural equipment. ATV and UTV used in farm applications are equipped with a 3-point linkage system at the rear of the ATV/UTV (A) and optional at the front of the ATV/UTV to connect with Receiver (7) an attachment to the ATV IUTV

In a small ATV/UTV/tractor, all the members of the linkage are rigid members. There is no softening or cushioning effect. Therefore, any load which comes from implement or from road/soil is transferred to the 3-point linkage which may lead to structural failure as well as vehicle instability. The vehicle may toggle, there may be safety related concerns. Thus, there is a need to have a system with safer linkage of implements with the vehicles. The objective of the invention is to provide such system with modified connector link of three-point linkage system. Another objective of the invention is to provide for a connector link with tension and compression applications.

### SUMMARY OF THE INVENTION

The following presents a simplified summary of the subject matter in order to provide a basic understanding of some of the aspects of subject matter embodiments. This summary is not an extensive overview of the subject matter. It is not intended to identify key/critical elements of the embodiments or to delineate the scope of the subject matter. Its sole purpose to present some concepts of the subject matter in a simplified form as a prelude to the more detailed description that is presented later.

A connector link or top link disclosed here addresses a device or system for a safer linkage of implements with the vehicles, an improved and modified connector link of three-point linkage system, and an improved connector link with tension and compression applications. The connector link or top link disclosed here comprises a tubular body a threaded bolt and an unthreaded bolt. The threaded bolt is insertable within one end of the tubular body, where the threaded bolt is configured to be threaded inside the tubular body for adjustment of length of the connector link. The unthreaded bolt is insertable within other end of the tubular body, where the unthreaded bolt is connected to a suspension member to counter compressive and expansive forces caused due to movement of an implement that is connected to the unthreaded bolt. In an embodiment, the connector link further comprises an adjusting bar used to rotate the tubular body and threaded bolt to adjust the length of the connector link.

In an embodiment, the suspension member comprises one of a spring member, a leaf spring, and an elastomeric pad. In an embodiment, the elastomeric pad comprises a locating member that prevents radial slippage of the elastomeric pad. In an embodiment, the suspension member comprises: a fluid filled cylinder, a piston assembly that is insertable into the fluid filled cylinder, and a valve positioned in the fluid filled cylinder that regulates flow of the fluid into and out of the fluid filled cylinder between chambers within the fluid filled cylinder. In an embodiment, the connector link further comprises a hydraulic shock absorber, wherein the spring member is a helical suspension spring which is supported by a reservoir tube of the hydraulic shock absorber. In an embodiment, wherein the hydraulic shock absorber comprises linear bearings within the tubular body of the connector link, wherein the tubular body of the connector link and the linear bearings provide strength to resist load pressure occurring during vehicle operation.

Description: The new spring-loaded auto connector link controls tensile and compressive forces and thus also the attached implement. During work, switching between rigid and floating position takes place automatically during lifting and lowering of the implement. During lifting, the implement moves through the centre position where it engages safely and then remains stable. While mechanical top links with hook or eyebolt must be set to the right dimension by hand but new spring loaded Auto top link are particularly convenient to operate just set the top link to the required length and with or without an attached implement.

During operation, the new spring-loaded connector link allows for considerable extra comfort. In addition, that desired damping rate can be adjusted to individual vehicle implement combinations. Impact loads caused by "bouncing implements" are isolated from the vehicle. This results in a markedly improved driving performance due to optimising the ground contact of the front axle. Consequently, safety is improved in all driving situations with more grip. In addition to improved driving comfort, there is an clear evidence of reduced component wear. The range of new spring loaded auto top link completely covers the different requirements of modern agriculture. The new spring loaded auto top link are compatible and interchangeable in comparison with manual or mechanical and hydraulic top links. They can be installed without additional components, and no additional space is required.

### BRIEF DESCRIPTION OF DRAWINGS:

The following drawings are illustrative of particular examples for enabling systems and methods of the present disclosure, are descriptive of some of the methods and mechanism, and are not intended to limit the scope of the invention. The drawings are not to scale (unless so stated) and are intended for use in conjunction with the explanations in the following detailed description.

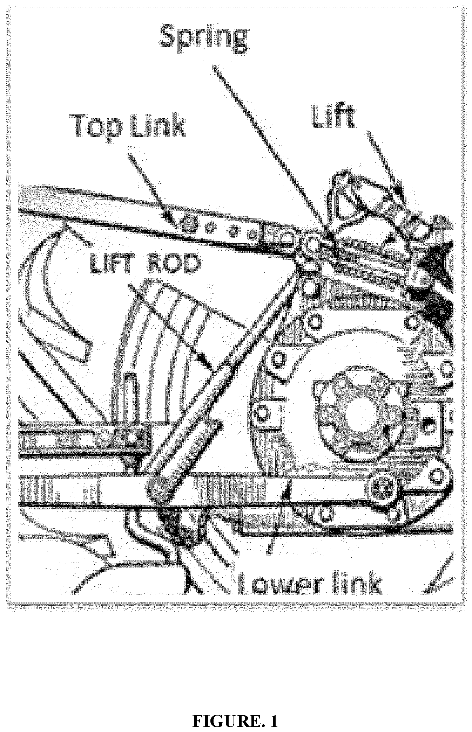

Figure 1 Shows the existing system of connector link being attached to a tractor.
Figure 2 provides a line diagram of three-point linkage system with point 1 and point 2 (labelled two times) depict the connector link and bottom links respectively of the three-points of the linkage system, as an example embodiment of the present disclosure.
Figure 3 is a photograph of three-point link attached to a vehicle, as an example embodiment of the present disclosure.
Figure 4 is a photograph of a three-point link attached to a vehicle along with additional implement, as an example embodiment of the present disclosure.
Figure 5A is pictorial representation of the connector link, as an example embodiment of the present disclosure.
Figure 5B is the line diagram of the sectional view of an embodiment of the connector link, as an example embodiment of the present disclosure.
Figure 5C is the line diagram of the sectional view of an embodiment of the connector link of the present invention with connector link in full closed conditions (compression), as an example embodiment of the present disclosure.
Figure 5D is the line diagram of the sectional view of an embodiment of the connector link of the present invention with connector link in full extension conditions (tension), as an example embodiment of the present disclosure.
Figure 6 is a side view of the connector link, as an example embodiment of the present disclosure.
Figure 7 is a table showing the field test summary in connection with the working of the connector link, as an example embodiment of the present disclosure.
Figure 8A is a side view of the connector link showing the suspension member as a hydraulics cushioning and shock absorber, as an example embodiment of the present disclosure.
Figure 8B is a side view of the connector link showing the suspension member as an elastomeric pad, as an example embodiment of the present disclosure.
Figure 8C is a side view of the connector link showing the suspension member as a helical spring cushions type, as an example embodiment of the present disclosure.
Figure 8D is a side view of the connector link showing the suspension member as a leaf spring cushions type, as an example embodiment of the present disclosure.

Persons skilled in the art will appreciate that elements in the figures are illustrated for simplicity and clarity and may represent both hardware and software components of the system. Further, the dimensions of some of the elements in the figure may be exaggerated relative to other elements to help to improve understanding of various exemplary embodiments of the present disclosure. Throughout the drawings, it should be noted that like reference numbers are used to depict the same or similar elements, features, and structures.

### DESCRIPTION OF THE INVENTION

Exemplary embodiments now will be described. The disclosure may, however, be embodied in many different forms and should not be construed as limited to the embodiments set forth herein; rather, these embodiments are provided so that this disclosure will be thorough and complete, and will fully convey its scope to those skilled in the art. The terminology used in the detailed description of the particular exemplary embodiments illustrated in the accompanying drawings is not intended to be limiting. In the drawings, like numbers refer to like elements.

It is to be noted, however, that the reference numerals used herein illustrate only typical embodiments of the present subject matter, and are therefore, not to be considered for limiting of its scope, for the subject matter may admit to other equally effective embodiments.

The specification may refer to "an", "one" or "some" embodiment(s) in several locations. This does not necessarily imply that each such reference is to the same embodiment(s), or that the feature only applies to a single embodiment. Single features of different embodiments may also be combined to provide other embodiments.

As used herein, the singular forms "a", "an" and "the" are intended to include the plural forms as well, unless expressly stated otherwise. It will be further understood that the terms "includes", "comprises", "including" and/or "comprising" when used in this specification, specify the presence of stated features, integers, steps, operations, elements, and/or components, but do not preclude the presence or addition of one or more other features, integers, steps, operations, elements, components, and/or groups thereof. It will be understood that when an element is referred to as being "connected" or "coupled" to another element, it can be directly connected or coupled to the other element or intervening elements may be present. Furthermore, "connected" or "coupled" as used herein may include operatively connected or coupled. As used herein, the term "and/or" includes any and all combinations and arrangements of one or more of the associated listed items.

Unless otherwise defined, all terms (including technical and scientific terms) used herein have the same meaning as commonly understood by one of ordinary skill in the art to which this disclosure pertains. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

### COMPONENT LIST:

- Connector link (1)
- Lower links (2)
- Lift rod (3) assists in movement of the up and down movement (vertical) of the implements and mounting purpose.
- Stabilizer (4) lateral swinging stability on 3-point linkage and implements.
- Joint (5)
- Structure (6)
- Receiver frame (7) for mounting ATV
- Threaded eyebolt (8) is configured to be threaded inside tubular structure of the connector link (1) for adjustment of length.
- Unthreaded eyebolt (9) is configured to connect the implement.
- Spring action (10) and
- Sleeve (11) or stock stopper
- Tummy bar (12) for rotating the tubular portion to adjust length.

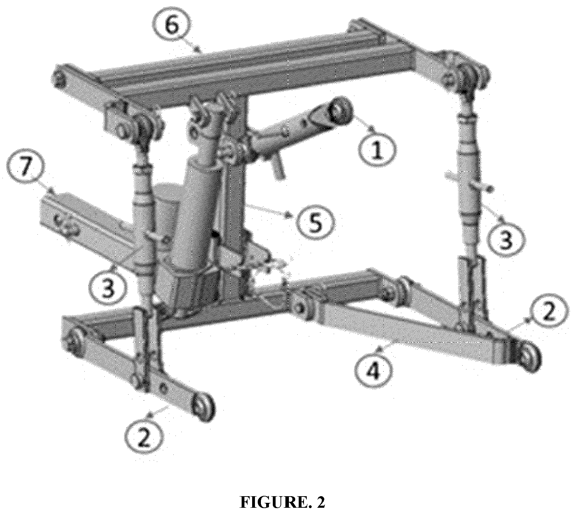

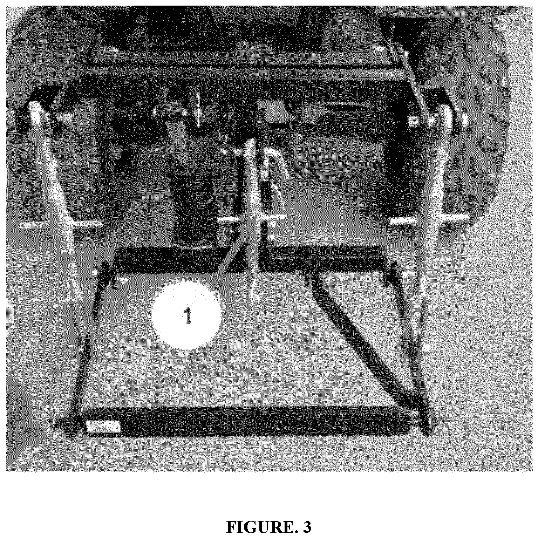

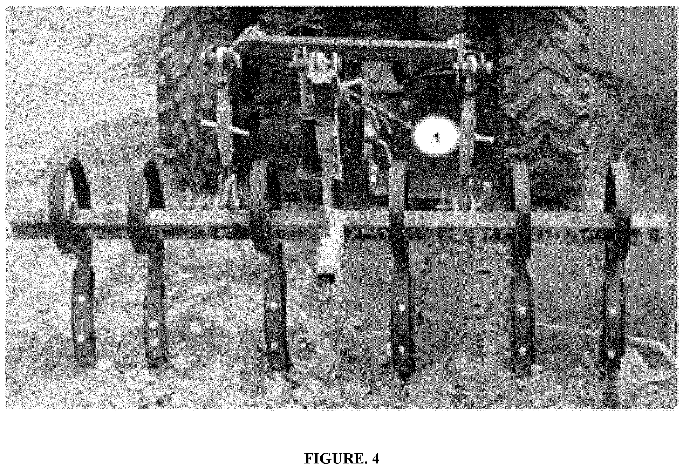

Referring to Figures 2-4, Figure 2 provides a line diagram of three-point linkage system with point 1 and point 2 (labelled two times) depict the connector link and bottom links respectively of the three-points of the linkage system, Figure 3 is a photograph of three-point link attached to a vehicle, Figure 4 is a photograph of a three-point link attached to a vehicle along with additional implement. The three-point linkage is shown in Figure 2. Connector link is indicated as (1) and bottom links are indicated as (2). The 3-point systems do have connector links (1) been connected between with a joint (5) to the structural frame and implements. Receiver frame (7) enables an attachment being connected to the ATV or UTV The connector link (1) is connected with implements for application. The device (1) can be activated and operated by a ground force and gravitational force with attachments.

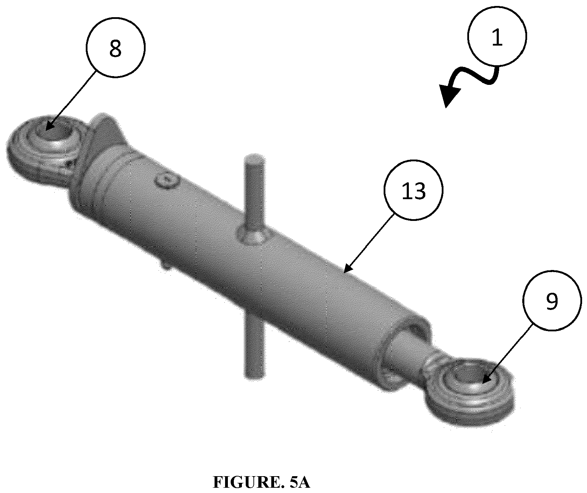

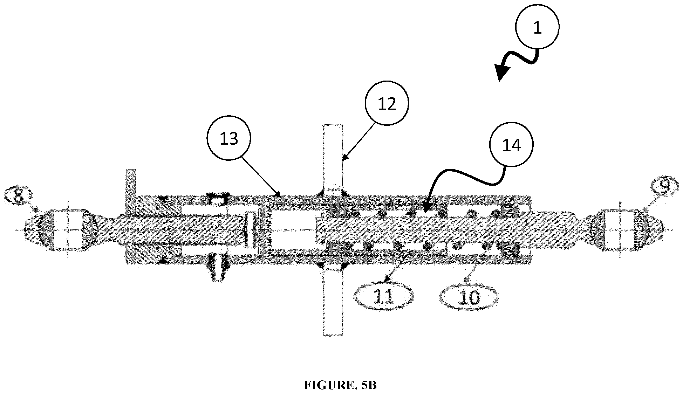

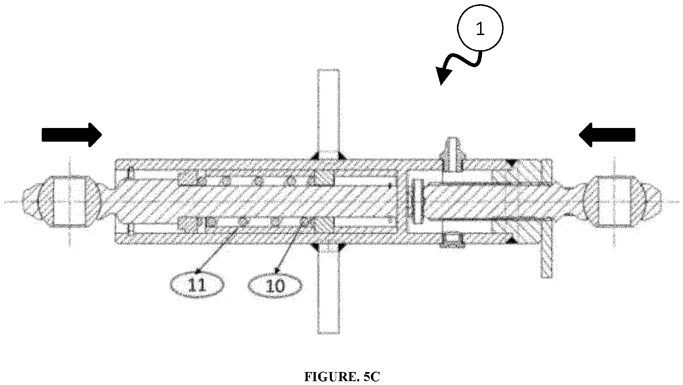

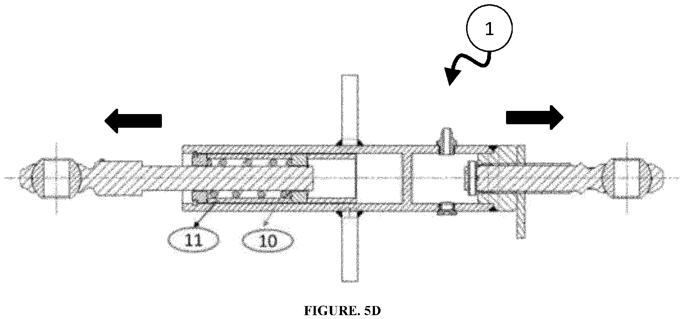

Referring to Figures 5A-5D, Figure 5A is pictorial representation of the connector link, Figure 5B is the line diagram of the sectional view of an embodiment of the connector link, Figure 5C is the line diagram of the sectional view of an embodiment of the connector link of the present invention with connector link in full closed conditions (compression), Figure 5D is the line diagram of the sectional view of an embodiment of the connector link of the present invention with connector link in full extension conditions (tension). As shown in Figure 5A-5B, the connector link (1) disclosed here comprises a tubular body (13) (Figure 5B), a threaded bolt (8), and an unthreaded bolt (9). The threaded bolt (8) or a threaded eyebolt is insertable within one end of the tubular body (13), where the threaded bolt (8) is configured to be threaded inside the tubular body (13) for adjustment of length of the connector link (1). The unthreaded bolt (9) or an unthreaded eyebolt is insertable within other end of the tubular body (13), where the unthreaded bolt (9) is connected to a suspension member (14) to counter compressive and expansive forces caused due to movement of an implement that is connected to the unthreaded bolt (9). In an embodiment, as shown in Figure 5B, the connector link (1) further comprises an adjusting bar (12) or a tummy bar used to rotate the tubular body (13) and threaded bolt (8) to adjust the length of the connector link (1).

Figures 5C and 5D show an embodiment of the present invention with the connector link being automatically adjusted in view of the spring action (10 and 11), which comprises the spring member (10) and the reservoir tube (11) leading to compressed and tensed states. The connector link (1) controls tensile and compressive forces and thus also the attached implement. During work, switching between rigid and floating position takes place automatically during lifting and lowering of the implement. During lifting, the implement moves through the centre position where it engages safely and then remains stable when using the connector link (1). While mechanical connector links with hook or eyebolt have to be set to the right dimension by hand but connector link of the invention are particularly convenient to operate by just setting the connector link to the required length with or without an attached implement. During operation, the connector link of the invention allows for considerable extra comfort. In addition, the desired damping rate can be adjusted to individual vehicle implement combinations.

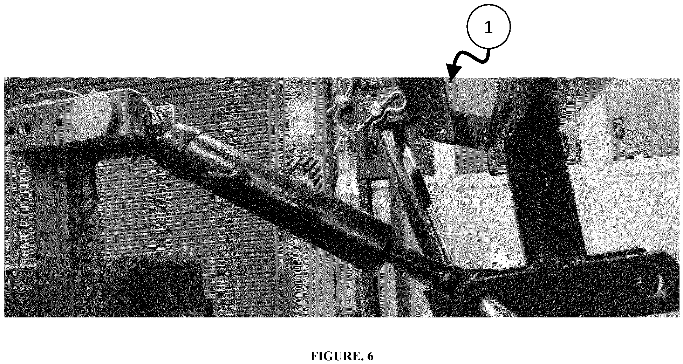

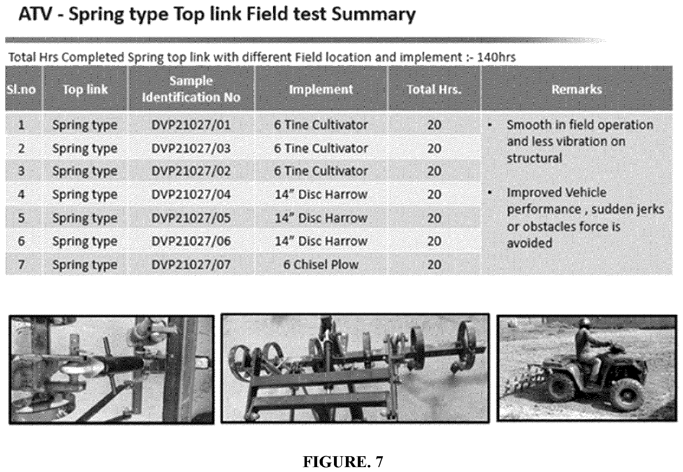

Referring to Figures 6-7, Figure 6 is a side view of the connector link, and Figure 7 is a table showing the field test summary in connection with the working of the connector link. In view of the above, impact loads caused by "bouncing implements" are isolated from the vehicle by using the connector link of the invention. This results in a markedly improved driving performance due to optimising the ground contact of the front axle. Consequently, safety is improved in all driving situations with more grip. In addition to improved driving comfort, the inventors have also found that there is reduced component wear. The range of connector link of the invention completely covers the different requirements of modern agriculture. The connector link of the invention is compatible and interchangeable in comparison with manual, mechanical, or hydraulic connector links. They can be installed without additional components, and no additional space is required. Simple coupling and uncoupling with implement are required for connector link of the invention. In an embodiment, the suspension member (14) may comprise a spring, for example a compression, tension, or leaf spring. Alternatively, the resilient member may comprise an elastomeric pad, made of, for example, rubber. The elastomeric pad may comprise locating means which prevents radial slippage of the pad.

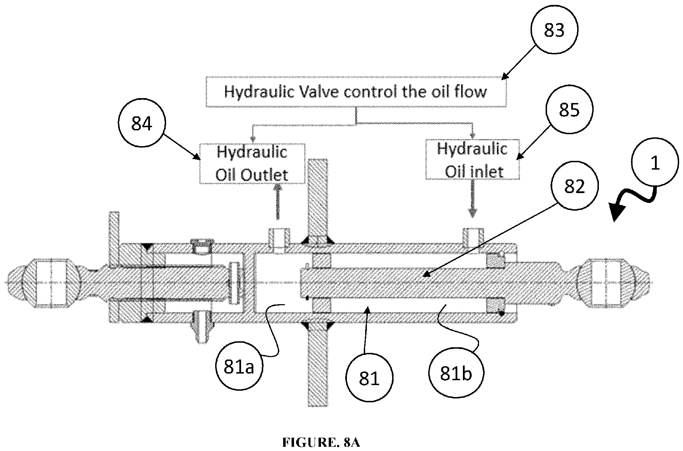

Figure 8A is a side view of the connector link showing the suspension member as a hydraulics cushioning and shock absorber, as an example embodiment of the present disclosure. In an embodiment, the suspension member (14) comprises: a fluid filled cylinder (81), a piston assembly (82) that is insertable into the fluid filled cylinder (81), and a valve (83) positioned in the fluid filled cylinder (81) that regulates flow of the fluid into via a hydraulic oil inlet (84) and out of via hydraulic oil outlet (85) the fluid filled cylinder (81) between chambers (81a and 81b) within the fluid filled cylinder (81). In other words, the shock absorber assembly in the connector link may include the fluid filled cylinder (81) against which a piston (82) is configured to act. The fluid filled cylinder (81) may include the valve (83) which controls the flow of the working fluid into or out of the fluid filled cylinder (81), which is between the two chambers (81a and 81b) within a fluid filled cylinder (81).

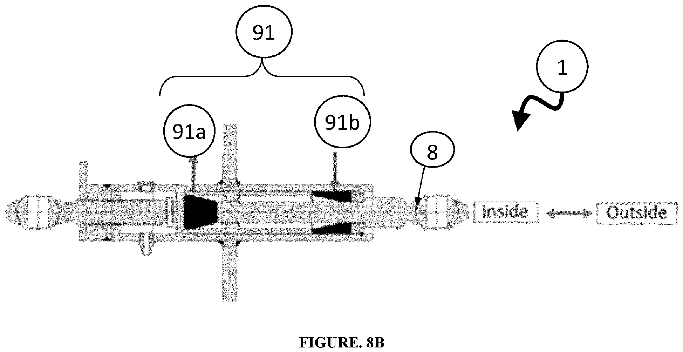

Figure 8B is a side view of the connector link (1) showing the suspension member (14) as an elastomeric pad (91), as an example embodiment of the present disclosure. In an embodiment, the elastomeric pad (91) comprises a locating member that prevents radial slippage of the elastomeric pad (91). The elastomeric pad (91) is a resilient member and during working, when the threaded eyebolt (8) moves inside the elastomeric pad (91a) is compressed on one side and when the threaded eyebolt (8) moves outside the elastomeric pad (91b) is compressed on the other side as shown in Figure 8B.

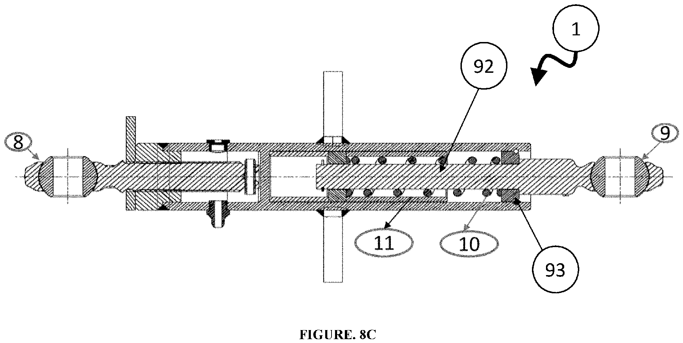

Figure 8C is a side view of the connector link showing the suspension member as a helical spring cushions type, as an example embodiment of the present disclosure. The description for Figure 8C is similar to the description provided for Figure 5B. In an embodiment, the connector link (1) further comprises a hydraulic shock absorber (92), wherein the spring member (10) is a helical suspension spring (10) which is supported by a reservoir tube (11) of the hydraulic shock absorber (92). The reservoir tube (11) prevents extended movement of the helical suspension spring (10) leftward as shown in Figure 8C and provides stoppage for movement of helical suspension spring (10) towards rightward direction at the stopper (93) position. The hydraulic shock absorber (92) also comprises linear bearings within the tubular body of the connector link (1), wherein the tubular body (13) of the connector link (1) and the linear bearings provide strength to resist load pressure occurring during vehicle operation. The reservoir tube (11) and bearing construction of the shock absorbers would further provide strength so that it effectively resists load pressure occurring during vehicle operation. This construction would allow the piston rod of the shock absorber to be smaller in diameter and lighter in weight.

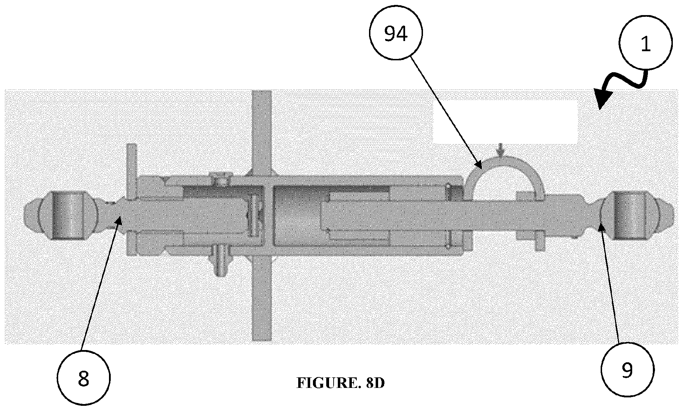

Figure 8D is a side view of the connector link showing the suspension member as a leaf spring (94) cushions type, as an example embodiment of the present disclosure. The leaf spring (94) is substantially C-shaped in construction as shown in Figure 8D, and it is attached to the unthreaded eyebolt (9), where in and our movement of the unthreaded eyebolt (9) is constrained by the action of the leaf spring (94) cushions type assembly.

Vibrations in a vehicle are avoided by using the connector link of the invention and field operation becomes smooth. The structural failure because of sudden jerk or obstacle force is avoided and performance of vehicle is improved by the connector link of the invention. The connector link of the invention helps for predefining draft load for better applications. Draft load can be adjusted based on applications for better field work. The connector link of the invention helps in grading of a soil by mixing it with other types of soils of different grades. Thus, a compacted soil mass can be achieved by using the novel system. The connector link of the invention provides for additional features or embodiments: Safety of structural parts of Three Point Linkage (TPL): The external load is fully borne by the spring loaded automatic connector link and also protects all other structural parts of TPL from damage.

Optimizing of the depth and draft while cultivating: The automatic connector link helps in adjusting depth and draft while cultivating depending upon types of soil and field in which it is being used. Compatibility with Vehicles: The automatic connector link can be use as compatible with all categories of vehicle.

In short, the connector link (1):
- Simplifies the coupling and uncoupling with implement.
- Avoids vibrations in a vehicle is avoided.
- Smoothens Field operation.
- Avoids structural failure because of sudden jerk or obstacle force.
- Improves performance of vehicle.
- Predefined draft load for better applications.
- Provides adjustment for draft Load based on applications for better field work.
- Helps in grading of a soil by mixing it with other types of soils of different grades. By doing so, a compacted soil mass can be achieved.

Current invention has been discussed specifically with full disclosure. However, numerous changes can be made in the detail of structures, combinations, and part arrangement along with technical advancements that will be implemented in near future without changing the spirit and scope of the invention.

Although the invention has been described with reference to specific embodiments, this description is not meant to be construed in a limiting sense. Various modifications of the disclosed embodiments, as well as alternate embodiments of the invention, will become apparent to persons skilled in the art upon reference to the description of the invention. It is therefore, contemplated that such modifications can be made without departing from the scope of the present invention as defined.

## Claims

1. A connector link (1) comprising:
a tubular body (13);
a threaded bolt (8) that is insertable within one end of the tubular body (13), wherein the threaded bolt (8) is configured to be threaded inside the tubular body (13) for adjustment of length of the connector link (1); and
an unthreaded bolt (9) is insertable within other end of the tubular body (13), wherein the unthreaded bolt (9) is connected to a suspension member (14) to counter compressive and expansive forces caused due to movement of an implement that is connected to the unthreaded bolt (9).

2. The connector link (1) as claimed in claim 1, further comprising an adjusting bar (12) used to rotate the tubular body (13) and threaded bolt (8) to adjust the length of the connector link (1).

3. The connector link (1) as claimed in claim 1, wherein the suspension member (14) comprises one of a spring member, a leaf spring, and an elastomeric pad.

4. The connector link (1) as claimed in claim 1, wherein the elastomeric pad (91) comprises a locating member that prevents radial slippage of the elastomeric pad (91).

5. The connector link (1) as claimed in claim 1, wherein the suspension member (14) comprises:
a fluid filled cylinder (81);
a piston assembly (82) that is insertable into the fluid filled cylinder (81); and
a valve (83) positioned in the fluid filled cylinder (81) that regulates flow of the fluid into and out of the fluid filled cylinder between chambers (81a and 81b) within the fluid filled cylinder (81).

6. The connector link (1) as claimed in claim 2, further comprising a hydraulic shock absorber (92), wherein the spring member (10) is a helical suspension spring (10) which is supported by a reservoir tube (11) of the hydraulic shock absorber (92).

7. The connector link (1) as claimed in claim 6, wherein the hydraulic shock absorber (92) comprises linear bearings within the tubular body (13) of the connector link (1), wherein the tubular body (13) of the connector link (1) and the linear bearings provide strength to resist load pressure occurring during vehicle operation.
